# EUROPÄISCHE PATENTSCHRIFT

(11) **EP 1 022 659 B1**
(45) Veröffentlichungstag und Bekanntmachung des Hinweises auf die Patenterteilung: **09.11.2005**
(21) Anmeldenummer: 00200072.7
(22) Anmeldetag: 11.01.2000
(51) Int. Cl.: G06F 12/14

(54) **Schaltungsanordnung zur elektonischen Datenverarbeitung**
Circuit for electronic data management
Circuit pour le traitement de données électroniques

(30) Priorität: 19.01.1999 DE 19901829
(43) Veröffentlichungstag der Anmeldung: 26.07.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Buhr, Wolfgang, Philips Corporate Int. Pty. GmbH, 52064 Aachen (DE)
(74) Vertreter: Volmer, Georg

(56) Entgegenhaltungen:
- EP-A- 0 617 383
- EP-A- 0 856 818
- US-A- 4 319 079
- US-A- 4 598 170
- US-A- 4 751 733
- US-A- 5 095 525
- DALLAS SEMICONDUCTOR: "DS5002FP Description" WEBARCHIVE.ORG, [Online] Februar 1998 (1998-02), Seiten 1-10, XP002253631 Gefunden im Internet: <URL:http://web.archive.org/web/1998061005 3242/www.dalsemi.com/DocControl/PDFs/5002f p.pdf> [gefunden am 2003-09-05]
- WEISS R: "ENHANCED 8051 DELIVERS SECURE OPERATION AND PROTECTS SOFTWARE" EDN ELECTRICAL DESIGN NEWS, CAHNERS PUBLISHING CO. NEWTON, MASSACHUSETTS, US, Bd. 37, Nr. 6, 16. März 1992 (1992-03-16), Seite 83 XP000298138 ISSN: 0012-7515

## Beschreibung

Die Erfindung bezieht sich auf eine Schaltungsanordnung zur elektronischen Datenverarbeitung.

Aus der englischsprachigen Kurzzusammenfassung der Druckschrift JP-A-08320832 ist ein nichtflüchtiger Halbleiterspeicher mit einer Geheimhaltungsfunktion bekannt, wie beispielsweise ein EPROM, ein EEPROM, ein maskenprogrammiertes ROM oder ein sogenannter Flash-Speicher, der einen Mikrocomputer benutzt. Dieser nichtflüchtige Halbleiterspeicher weist eine Verwürfelungseinheit auf, die Eingangsinformation verändert und ausgibt, wenn Daten, die von einem ausgewählten Element des nichtflüchtigen Speichers ausgelesen werden, und eingegebene Schlüsselcode-Information miteinander übereinstimmen. Der Speicher umfaßt ein Speicherfeld, welches aus einer Vielzahl nichtflüchtiger Speicherelemente besteht, die in Matrixform angeordnet sind. Ein Benutzer schreibt eine Schlüsselcode-Information in eine nichtflüchtige Speichereinheit, und ein Element eines flüchtigen Speichers wird ausgewählt. Ein Komparator vergleicht die Daten, die vom ausgewählten Speicherelement ausgelesen werden, und die Schlüsselcode-Information und gibt die Vergleichsergebnisse aus. Eine Verwürfelungseinheit gibt die Eingangsinformation unverändert aus, wenn die verglichenen Daten nicht übereinstimmen, und verändert die Eingangsinformation und gibt sie aus, wenn die verglichenen Daten übereinstimmen. Dies soll dem Benutzer ermöglichen, eine Speicheradresse unabhängig zu entscheiden. Die Geheimhaltung gespeicherter Information soll verbessert werden können, wodurch die Zuverlässigkeit erhöht werden soll. Dadurch soll die Anzahl der Personen, die eine geheime Schlüsselcode-Information kennen, reduziert werden. Außerdem soll die Steuerung vereinfacht und sollen Kosten verringert werden.

Aus der Druckschrift "DALLAS SEMICONDUCTOR: 'DS5002FP Description' WEBARCHIVE.ORG, [Online] Februar 1998 (1998-02), Seiten 1-10, XP002253631" ist ein Mikroprozessor für sicherheitsempfindliche Anwendungen bekannt, der einen beschreibbaren Speicher zum Speichern verschlüsselter Daten, einen Schlüsselspeicher zum Speichern eines 64 Datenbits umfassenden Schlüsselwortes, einen "Bootstrap-Lader", der beim Steuern des Ladens einer Applikationssoftware eingesetzt wird, eine Adreßverschlüsselungseinheit zum Verschlüsseln von Adressen und eine Datenverschlüsselungseinheit zum Verschlüsseln von Daten, die unter den verschlüsselten Adressen gespeichert werden sollen, umfaßt.

Die Erfindung hat die Aufgabe, eine Schaltungsanordnung zur elektronischen Datenverarbeitung mit erhöhter Sicherheit gegen unberechtigten Zugriff zu schaffen.

Erfindungsgemäß wird diese Aufgabe bei einer Schaltungsanordnung der gattungsgemäßen Art durch die kennzeichnenden Merkmale des Patentanspruchs 1 gelöst.

Speicher, die in Schaltungsanordnungen zur elektronischen Datenverarbeitung eingesetzt und insbesondere im Rahmen des Betriebes einer solchen Schaltungsanordnung beschreibbar sind, zeigen in herkömmlicher Weise einen regelmäßigen Aufbau, so daß Adreß- und/oder Datensignale nach einem bestimmten, übersichtlichen Schema zugeführt und Datensignale auch entsprechend aus einem solchen Speicher abgeleitet werden können. In Anwendungen, bei denen eine Geheimhaltung solcher Daten oberstes Gebot ist, ist jedoch eine derartige, regelmäßige Struktur nachteilig, da sie verhältnismäßig einfach auch durch nicht autorisierte Zugriffe ausforschbar ist. Daher sind in einem solchen Speicher für sicherheitsrelevante Anwendungen wie beispielsweise auf dem Gebiet der Identifikation gegen Ausforschung zu schützende Daten nicht hinreichend sicher abzuspeichern.

Es könnte nun versucht werden, dem beschriebenen Sicherheitserfordernis dadurch Rechnung zu tragen, daß Adressen und Daten in dem beschreibbaren Speicher nach einem festen, jedoch möglichst geheim zu haltenden Schema verwürfelt werden. Dies verschleiert zwar die Struktur der Adressen und Daten; allerdings wäre bei Herstellung einer großen Anzahl gleichartiger Schaltungsanordnungen bei allen die gewählte Verwürfelung identisch. Es bestünde dann die Möglichkeit, daß diese Verwürfelung an einem Exemplar der genannten Schaltungsanordnung ausgeforscht wird, und daß mit dem Wissen um das Verwürfelungsschema dieser einen Schaltungsanordnung ein unberechtigter Zugriff auf alle anderen, gleichartigen Schaltungsanordnungen ermöglicht oder zumindest doch erleichtert würde.

Um auch diese Gefahr auszuschließen, wird erfindungsgemäß das verwendete Verwürfelungsmuster von im Lesespeicher abgelegten, individualisierenden Daten abhängig gemacht. Diese Daten sind für jedes einzelne Exemplar der erfindungsgemäßen Schaltungsanordnung verschieden gewählt und erlauben somit eine Identifizierung eines ganz bestimmten, individuellen Exemplars der erfindungsgemäßen Schaltungsanordnung. Ein dadurch beeinflußtes Verwürfelungsmuster der Adreß- und/oder Datensignale für den beschreibbaren Speicher stellt sicher, daß auf jedem individuellen Exemplar der erfindungsgemäßen Schaltungsanordnung auch ein individuelles, nicht wiederkehrendes Verwürfelungsmuster zur Anwendung kommt. Damit ist es unmöglich, selbst nach Ausforschung des Verwürfelungsmusters eines Exemplars der erfindungsgemäßen Schaltungsanordnung mit diesem Wissen Zugriff zu den geschützten Daten im beschreibbaren Speicher irgendeines anderen Exemplars der erfindungsgemäßen Schaltungsanordnung zu erlangen.

In der zweiten erfindungsgemäßen Maßnahme, die in Kombination mit der vorbeschriebenen, ersten Maßnahme zur Anwendung gelangt, werden zur Verwürfelung Kontrollsignale herangezogen, die von einem in der Schaltungsanordnung enthaltenen Steuerwerk erzeugt werden, wenn während deren Betriebes eine vorbestimmte Rücksetzsignalfolge auszuführen ist. Die während dieser Rücksetzsignalfolge - auch als "Reset-Sequenz" bezeichnet - erzeugten Kontrollsignale werden im Verwürfelungsmustergenerator mit den individualisierenden Daten aus dem Lesespeicher, einem Teil dieser Daten oder einer Kombination aus wenigstens einem Teil dieser individualisierenden Daten mit anderen Daten, verknüpft, so daß das erfindungsgemäß erzeugte Verwürfelungsmuster - dargestellt durch die Verwürfelungsmustersignale - sowohl von den individualisierenden Daten als auch von den Kontrollsignalen beeinflußt ist. Der Einfluß durch die Kontrollsignale wirkt sich dabei in der Weise aus, daß bei einem unberechtigten Zugriff, durch den eine Störung dieser Kontrollsignale auftritt, ein falsches Verwürfelungsmuster erzeugt würde, bei dessen Anwendung aus dem beschreibbaren Speicher entnommene Daten unbrauchbar wären. So kann verhindert werden, daß bei einem unberechtigten Zugriff - auch als Sicherheitsangriff bezeichnet - durch äußere Beeinflussung bestimmter Kontrollsignale die Sicherheitsmechanismen der erfindungsgemäßen Schaltungsanordnung zum Schutz der eingespeicherten Daten umgangen und insbesondere zu schützende Daten aus dem beschreibbaren Speicher ausgelesen und damit ausgeforscht werden.

Gemäß der dritten erfindungsgemäßen Maßnahme, die in Kombination mit den beiden vorbeschriebenen Maßnahmen zur Anwendung gelangt, umfaßt der Verwürfelungsmustergenerator eine getaktete, rückgekoppelte Schieberegisteranordnung. Dieser Schieberegisteranordnung werden während der Rücksctzsignalfolge die Kontrollsignale und/oder wenigstens ein Teil der individualisierenden Daten aus dem Lesespeicher und/oder ein durch logische Verknüpfung daraus erzeugtes Signalmuster zugeleitet. Aus diesem Signalmuster erzeugt die Schieberegisteranordnung die Verwürfelungsmustersignale und speichert sie zur anschließenden Abgabe an die Verwürfelungslogik.

Die erfindungsgemäße Schaltungsanordnung ist bevorzugt einsetzbar für Identifikationseinrichtungen, insbesondere Chipkarten, elektronische Etiketten, elektronische Zugangsschlüssel und dergleichen. Damit lassen sich im beschreibbaren Speicher nicht nur herkömmliche Daten wie beispielsweise Kontostände oder dergleichen geschützt ablegen, vielmehr besteht eine bevorzugte Anwendung darin, daß als beschreibbarer Speicher - auch in der Form eines wiederbeschreibbaren Speichers ausgebildet - ein EEPROM vorgesehen ist, in dem als zu schützende Daten ganze Anwenderprogramme gespeichert werden können. Damit ist es möglich, beispielsweise eine Chipkarte, die eine solche Schaltungsanordnung umfaßt, wahlweise ohne Änderung des konstruktiven Aufbaus für verschiedene Anwendungsfälle zu präparieren. Je nach eingespeicherten Daten bzw. Programmen im beschreibbaren Speicher kann eine solche Chipkarte dann beispielsweise wunschgemäß als Kreditkarte, Zugangsschlüssel, Einkaufsausweis oder dergleichen dienen, und es können beispielsweise in der Funktion als Kreditkarte Anwendungen für unterschiedliche Kreditinstitute an unterschiedlichen Orten je nach Wahl programmiert werden. Auch eine Kombination derartiger Anwendungen nach Maß, d.h. für den jeweiligen Benutzer individuell zusammengestellt, ist denkbar. Dabei übernimmt dann der Lesespeicher die Speicherung der auf den einzelnen Benutzer individuell bezogenen Daten. Der Lesespeicher ist vorzugsweise als ROM, insbesondere als programmierbares ROM, ausgebildet.

Um die Verarbeitung der erfindungsgemäß verwürfelten Daten vom beschreibbaren Speicher in beispielsweise einem Rechenwerk zu ermöglichen, welches für alle Exemplare der erfindungsgemäßen Schaltungsanordnung vorzugsweise identisch ausgebildet ist, müssen die individuell verwürfelten Daten beim Auslesen aus dem beschreibbaren Speicher wieder in ein einheitliches Datenformat rückübertragen werden, d.h. die Verwürfelung muß entsprechend rückgängig gemacht werden. Dieser Vorgang ist hier als "Entwürfeln" bezeichnet.

Vorzugsweise umfaßt die Verwürfelungslogik der erfindungsgemäßen Schaltungsanordnung eine Vertauschungsstufe zum Vertauschen verschiedenwertiger Bits der Verwürfelungslogik zugeführter Adreß- und/oder Datensignale untereinander und eine Invertierungsstufe zum Invertieren der Werte der Bits der Adreß- und/oder Datensignale. Dadurch lassen sich als Verwürfelungsoperationen sowohl eine Vertauschung als auch eine Invertierung der Daten und/oder der Adressen im beschreibbaren Speicher erreichen. Es wird somit sowohl die räumliche Zuordnung einzelner Speicherzellen des beschreibbaren Speichers unregelmäßig verwürfelt als auch die Bedeutung der in diesen Speicherzellen gespeicherten Werte durch eine unregelmäßige Invertierung verschleiert. Sowohl die Vertauschungsstufe als auch die Invertierungsstufe werden durch die Verwürfelungsmustersignale gesteuert.

Diese Steuerung kann nach einer Weiterbildung der Erfindung durch Steuersignale vorgenommen werden, die in einer Dekodierstufe aus den Verwürfelungsmustersignalen gewonnen werden. Die Dekodierstufe ist bevorzugt als Bestandteil der Verwürfelunoslogik ausgebildet.

Ein Ausführungsbeispiel der erfindungsgemäßen Schaltungsanordnung ist in der Zeichnung dargestellt und wird im nachfolgenden näher beschrieben. Es zeigen:
- Fig. 1: ein blockschematisches Schaltbild des Ausführungsbeispiels und
- Fig. 2: ein logisches Schaltbild eines Teils der Schaltungsanordnung nach Fig. 1.

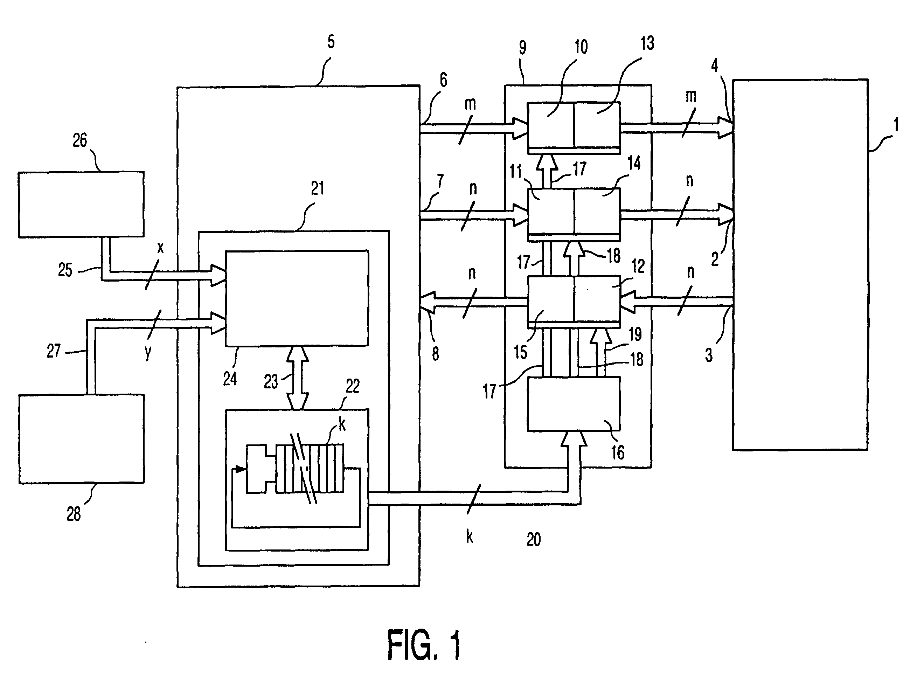

In der Schaltungsanordnung gemäß Fig. 1, die vorzugsweise für den Einsatz in einer Chipkarte vorgesehen sein kann, ist mit dem Bezugszeichen 1 ein beschreibbarer Speicher bezeichnet, der im vorliegenden Ausführungsbeispiel als EEPROM ausgebildet ist. In diesem beschreibbaren Speicher 1 sind anwendungsbezogene Daten bzw. Programme gegen unberechtigten Zugriff geschützt zu speichern. Diese Daten werden über einen Dateneingang 2 mit n parallelen Bitleitungen in der Form von n parallelen Datensignalen zugeführt. Entsprechend sind über einen Datenausgang 3 mit n parallelen Bitleitungen n parallele Datensignale aus dem beschreibbaren Speicher 1 auslesbar. Zur Adressierung der Speicherzellen des beschreibbaren Speichers 1 werden diesem über einen Adreßeingang 4 mit m parallelen Bitleitungen m parallele Adreßsignale zugeführt. Die Anzahlen n und m der Bitleitungen können unterschiedlich gewählt sein, je nach der für den Einsatzfall der erfindungsgemäßen Schaltungsanordnung günstigsten Datenform.

Die Adreß- und Datensignale werden zwischen dem beschreibbaren Speicher 1 und einer Speicher-Interfaceschaltung - im vorliegenden Beispiel einem EEPROM-Interface - ausgetauscht. Dazu weist die Speicher-Interfaceschaltung 5 einen Adreßausgang 6 mit m parallelen Bitleitungen für m parallele Adreßsignale sowie einen Datenausgang 7 und einen Dateneingang 8 mit je n parallelen Bitleitungen für n parallele Datensignale auf.

Die Adreß- und Datensignale zwischen dem beschreibbaren Speicher 1 und der Speicher-Interfaceschaltung 5 werden über eine Verwürfelungslogik 9 übertragen. Die Verwürfelungslogik 9 umfaßt eine Vertauschungsstufe, die aus drei Teilen mit den Bezugszeichen 10, 11 und 12 besteht, sowie eine Invertierungsstufe aus den drei Teilen 13, 14 bzw. 15. Dabei ist der Adreßausgang 6 der Speicher-Interfaceschaltung 5 über den ersten Teil 10 der Vertauschungsstufe und den ersten Teil 13 der Invertierungsstufe mit dem Adreßeingang 4 des beschreibbaren Speichers verbunden. Vom Datenausgang 7 der Speicher-Interfaceschaltung 5 ist eine Verbindung über den zweiten Teil 11 der Vertauschungsstufe und den zweiten Teil 14 der Invertierungsstufe an den Dateneingang 2 des beschreibbaren Speichers 1 geführt. Der Datenausgang 3 des beschreibbaren Speichers 1 ist über den dritten Teil 12 der Vertauschungsstufe und den dritten Teil 15 der Invertierungsstufe mit dem Dateneingang 8 der Speicher-Interfaceschaltung 5 verbunden. In der Darstellung des Blockschaltbilds nach Fig. 1 sind die ersten und zweiten Teile 10, 13 und 11, 14 der Vertauschungsstufe und der Invertierungsstufe in der Verwürfelungslogik 9 getrennt dargestellt, so daß eine getrennte Verwürfelung der Adreßsignale und der Datensignale vorgenommen wird. Insbesondere können aber der erste und zweite Teil 10, 11 der Vertauschungsstufe und können auch der erste und zweite Teil 13, 14 der Invertierungsstufe derart zusammengefaßt werden, daß auch eine Verwürfelung von Adreß- und Datensignalen miteinander vorgenommen werden kann.

Die Verwürfelungslogik 9 umfaßt ferner eine Dekodierstufe 16, von der über Steuerleitungen 17, 18 bzw. 19 Steuersignale zum Steuern der Vertauschungsstufe 10, 11, 12 und der Invertierungsstufe 13, 14, 15 abgegeben werden. Dabei werden über die erste Steuerleitung 17 Steuersignale zum Steuern der Kombination aus dem ersten Teil 10 der Vertauschungsstufe und dem ersten Teil 13 der Invertierungsstufe geleitet. Entsprechend dient die zweite Steuerleitung 18 den Steuersignalen für die Kombination aus dem zweiten Teil 11 der Vertauschungsstufe und dem zweiten Teil 14 der Invertierungsstufe. Über die dritte Steuerleitung 19 werden die Steuersignale zum Steuern der Kombination des dritten Teils 12 der Vertauschungsstufe mit dem dritten Teil 15 der Invertierungsstufe geführt.

Die Steuersignale werden in der Dekodierstufe 16 aus Verwürfelungsmustersignalen gewonnen, die über eine Verwürfelungsmustersignalleitung 20 von der Speicher-Interfaceschaltung 5 zugeführt werden. In der Schaltungsanordnung nach Fig. 1 ist eine Anzahl k parallelen Verwürfelungsmustersignalen vorgesehen, wobei diese Anzahl k unabhängig von den Anzahlen n und m der Daten- bzw. Adreßsignale gewählt werden kann. Entsprechend ist die Verwürfelungsmustersignalleitung 20 mit k parallelen Bitleitungen ausgeführt.

Die Verwürfelungsmustersignale werden in einem Verwürfelungsmustergenerator 21 erzeugt, der von der Speicher-Interfaceschaltung 5 umfaßt ist. In der blockschematischen Darstellung des Ausführungsbeispiels nach Fig. 1 umfaßt der Verwürfelungsmustergenerator 21 eine getaktete rückgekoppelte Schieberegisteranordnung 22 und eine mit dieser über eine Datenaustauschleitung 23 verbundene Verknüpfungsschaltung 24. Die Verknüpfungsschaltung 24 wiederum ist über eine Datenverbindung 25 mit x parallelen Bitleitungen an einen Lesespeicher 26 angeschlossen und über eine weitere Datenverbindung 27 mit y parallelen Bitleitungen mit einem Steuerwerk 28 verknüpft. Der Lesespeicher, der bevorzugt als ROM oder auch als programmierbarer Lesespeicher (PROM) ausgebildet sein kann, enthält vorzugsweise Daten, die auf den Benutzer der erfindungsgemäßen Schaltungsanordnung bezogen sind, also für jedes einzelne Exemplar der Schaltungsanordnung individuelle Werte aufweisen. Auch die Datenstruktur in dem Lesespeicher 26 kann individuell unterschiedlich ausgebildet sein. Diese individualisierenden Daten oder ein Teil von ihnen, gegebenenfalls zusammen mit weiteren, im Lesespeicher gespeicherten Daten, werden über die Datenverbindung 25 der Verknüpfungsschaltung 24 zugeführt. Über die Datenverbindung 27 werden aus dem Steuerwerk 28 Kontrollsignale an die Verknüpfungsschaltung 24 geleitet. Diese Kontrollsignale werden in Abhängigkeit einer vom Steuerwerk 28 während des Betriebs der Schaltungsanordnung auszuführenden Rücksetzsignalfolge, einer sogenannten "RESET-Sequenz" in diesem Steuerwerk 28 gebildet und beispielsweise auch während dieser Rücksetzsignalfolge über die Datenverbindung 27 abgegeben. In der Verknüpfungsschaltung 24 erfolgt zunächst eine logische Verknüpfung der aus dem Lesespeicher 26 über die Datenverbindung 25 übertragenen Daten mit den Kontrollsignalen. Die Wortbreiten, d.h. die Anzahlen x und y der parallelen Bitleitungen der Datenverbindungen 25 und 27, lassen sich wiederum unabhängig voneinander und von den Anzahlen der Bitleitungen der vorstehend beschriebenen Verbindungen wählen.

Das Ergebnis der in der Verknüpfungsschaltung 24 vorgenommenen logischen Verknüpfung der Daten aus dem Lesespeicher 26 und der Kontrollsignale wird über die Datenaustauschleitung 23 der getakteten rückgekoppelten Schieberegisteranordnung 22 zugeführt und steuert in dieser Schieberegisteranordnung 22 die Erzeugung und Speicherung der Verwürfelungsmustersignale. Dazu kann auch eine Rückkopplung von Daten aus der Schieberegisteranordnung 22 an die Verknüpfungsschaltung 24 über die Datenaustauschleitung 23 vorgesehen sein. Bevorzugt kann die Schieberegisteranordnung 22 eine Anzahl von k Registerzellen entsprechend der k parallelen Bitleitungen der Verwürfelungsmustersignalleitung 20 aufweisen, d.h. in jeder der k Registerzellen der Schieberegisteranordnung 22 wird nach Beendigung der Rücksetzsignalfolge eines von k neu gebildeten Verwürfelungsmustersignalen gespeichert. Diese gelangen dann über die Verwürfelungsmustersignalleitung 20 an die Dekodierstufe 16 der Verwürfelungslogik 9.

Je nach Ausbildung des Steuerwerks 28 kann nun vorgesehen sein, daß bei jeder ordnungsgemäß ausgeführten Rücksetzsignalfolge wieder dieselben Kontrollsignale entstehen, so daß zusammen mit den unveränderten Daten aus dem Lesespeicher 26 bei ordnungsgemäßer, d.h. befugter Benutzung der erfindungsgemäßen Schaltungsanordnung wieder Verwürfelungsmustersignale mit denselben Werten gebildet werden. Dies ist vorteilhaft, wenn auch nach einer ordnungsgemäß durchgeführten Rücksetzsignalfolge der Inhalt des beschreibbaren Speichers 1 vom befugten Benutzer noch verwendet werden können soll. Eine nicht ordnungsgemäß ausgeführte Rücksetzsignalfolge, beispielsweise durch einen unbefugten Zugriffsversuch, verändert dann die Kontrollsignale und damit die Verwürfelungsmustersignale. Dadurch kann das Entwürfeln der im beschreibbaren Speicher 1 gespeicherten Daten nicht ordnungsgemäß vorgenommen werden; über die jeweils dritten Teile 12 und 15 der Vertauschungsstufe und der Invertierungsstufe werden an die Speichet-Interfaceschaltung 5 nur unleserliche Daten geliefert.

Das Steuerwerk 28 kann in einer Abwandlung jedoch auch derart ausgebildet sein, daß die genannte Rücksetzsignalfolge nur bei einem unbefugten Zugriffsversuch oder bei einem befugten, vollständigen Neueinspeichern von Daten in den beschreibbaren Speicher 1 ausgelöst wird und daß die daraus gebildeten Verwürfelungsmustersignale bis zum Auftreten der nächsten Rücksetzsignalfolge gespeichert werden und unverändert bleiben, daß jedoch im Verwürfelungsmustergenerator 21 oder gegebenenfalls im Steuerwerk 28 in die Bildung der Verwürfelungsmustersignale eine Zufallsfunktion aufgenommen wird, so daß durch jede Rücksetzsignalfolge neue, nicht reproduzierbare Verwürfelungsmustersignale entstehen. Dann wird auch ein anschließendes Einspeichern von Daten in den beschreibbaren Speicher 1 - wie bei den bisher beschriebenen Ausführungen auch hier über die ersten und zweiten Teile 10, 11 bzw. 13, 14 der Vertauschungsstufe und der Invertierungsstufe vorgenommen - nach einem neuen Verwürfelungsmuster vorgenommen. Entsprechend ist das Entwürfeln - wieder wie auch bei den vorstehend beschriebenen Ausführungen über die dritten Teile 12 bzw. 15 der Vertauschungsstufe und der Invertierungsstufe vorgenommen - der Daten aus dem beschreibbaren Speicher 1 nach einer dem gültigen Verwürfelungsmuster angepaßten Vorschrift nur bis zum Auftreten der nächsten Rücksetzsignalfolge möglich. Damit ist ein Zugriff auf die Daten aus dem beschreibbaren Speicher 1 durch eine Rücksetzsignalfolge blockiert.

Die Erfindung erlaubt somit in verschiedenen Varianten die Erzeugung eines variablen, aber reproduzierbaren Verwürfelungsmusters. Eine Anpassung der Erfindung an unterschiedliche Betriebsweisen und Anwendungszwecke ist leicht möglich.

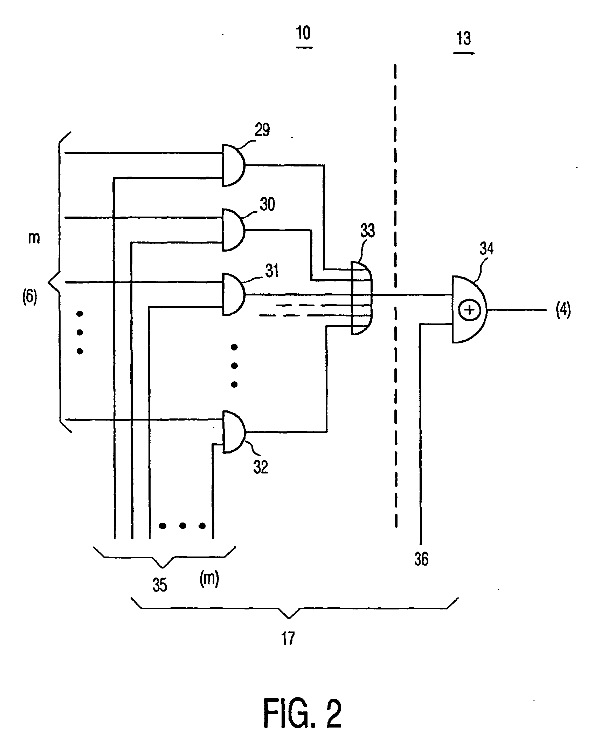

Fig. 2 zeigt am Beispiel der jeweils ersten Teile 10 bzw. 13 schematisch die Struktur der Vertauschungsstufe und der Invertierungsstufe, wobei der Übersichtlichkeit halber blockschematisch nur die benötigten logischen Gatter dargestellt sind, die mit einer der m Bitleitungen verbunden sind, die an den Adreßeingang 4 des beschreibbaren Speichers 1 geführt ist. Die Teile 11, 12 bzw. 14, 15 der Vertauschungsstufe und der Invertierungsstufe für die Verwürfelung der Datensignale sind jedoch entsprechend aufgebaut. In Fig. 2 ist eine Variante eines Aufbaus dargestellt, in der die Adreßsignale auf den m parallelen Bitleitungen vom Adreßausgang 6 her nur untereinander, jedoch nicht mit den Datensignalen vom Datenausgang 7 verwürfelt werden. Eine entsprechende Abwandlung der Anordnung nach Fig. 2 ist jedoch ohne weiteres ersichtlich.

In Fig. 2 wird jede der m parallelen Bitleitungen vom Adreßausgang 6 - Bezugszeichen in Klammern - an einen ersten Eingang je eines Und-Gatters 29, 30, 31 bzw. 32 geführt. Je ein zweiter Eingang dieser Und-Gatter 29 bis 32 ist mit je einer von m Auswahlleitungen 35 verbunden, die Teil der ersten Steuerleitung 17 sind. Über diese Auswahlleitungen 35 wird jeweils nur eines der Und-Gatter 29 bis 32 ausgewählt, so daß nur am Ausgang eines der Und-Gatter 29 bis 32 ein Adreßsignal auftritt. Dieses Adreßsignal wird über ein Oder-Gatter 33, welches die Ausgänge aller Und-Gatter 29 bis 32 auf eine Bitleitung zusammen führt, an einen ersten Eingang eines Exclusiv-Oder-Gatters 34 geleitet. Während die Und-Gatter 29 bis 32 und das Oder-Gatter 33 vom ersten Teil 10 der Vertauschungsstufe umfaßt sind, ist das Exclusiv-Oder-Gatter 34 im ersten Teil 13 der Invertierungsstufe enthalten. Ein zweiter Eingang des Exclusiv-Oder-Gatters 34 ist an eine Invertierungssteuerleitung 36 angeschlossen, die ebenfalls Teil der ersten Steuerleitung 17 ist. Ein Ausgang des Exclusiv-Oder-Gatters 34 ist mit einer Bitleitung des Adreßeingangs 4 des beschreibbaren Speichers 1 verbunden. Gesteuert durch die Steuersignale auf der ersten Steuerleitung 17 wird im Exclusiv-Oder-Gatter 34 das ausgewählte Adreßsignal gemäß der Vorgabe durch die Verwürfelungsmustersignale invertiert oder nichtinvertiert durchgelassen. Durch entsprechende Ausbildung der Steuersignale auf der Steuerleitung 17 wird gewährleistet, daß die gewünschte Verwürfelung der Adreßsignale auftritt, d.h. daß jedes der Adreßsignale wieder auf genau einer der Bitleitungen des Adreßeingangs 4 des beschreibbaren Speichers 1 erscheint.

Mit der dargestellten Struktur der Verwürfelungslogik sind auf einfache Weise auch komplizierte Verwürfelungsmuster je nach Anforderung einsetzbar. Die Zuordnung einzelner Datenworte zu den Speicherelementen des beschreibbaren Speichers 1, die Anordnung der einzelnen Bits im jeweiligen Datenwort und auch die Werte dieser Bits lassen sich in dieser Art sehr einfach verwürfeln. Darüber hinaus ist auch eine entsprechende, gemeinsame Verwürfelung von Adreß- und Datensignalen erreichbar. Die dargestellte Verwürfelungslogik hat außerdem den Vorteil, daß durch sie nur eine sehr geringfügige Verlängerung der Signallaufzeiten von der Speicher-Interfaceschaltung 5 zum beschreibbaren Speicher 1 und zurück verursacht wird. So erzeugt die in Fig. 2 dargestellte Verwürfelungslogik lediglich eine Verzögerung um die Summe der Signallaufzeiten in einem Und-Gatter 29, 30, 31 bzw. 32, dem Oder-Gatter 33 und dem Exclusiv-Oder-Gatter 34.

## Patentansprüche

1. Schaltungsanordnung zur elektronischen Datenverarbeitung mit
- einem beschreibbaren Speicher (1) zum Speichern von gegen unberechtigten Zugriff zu schützenden Daten,
- einem Lesespeicher (26) zum Speichern individualisierender Daten,
- einem Steuerwerk (28) zum Erzeugen bestimmter Kontrollsignale in Abhängigkeit einer vom Steuerwerk (28) während des Betriebs der Schaltungsanordnung auszuführenden Rücksetzsignalfolge,
- einem Verwürfelungsmustergenerator (21) zum Erzeugen von Verwürfelungsmustersignalen durch Verknüpfen wenigstens eines Teils der individualisierenden Daten aus dem Lesespeicher (26) mit den Kontrollsignalen während des Ausführens der Rücksetzsignalfolge und zum anschließenden Ausgeben dieser Verwürfelungsmustersignale bis zum Ausführen einer folgenden Rücksetzsignalfolge
- sowie einer Verwürfelungslogik (9) zum Verwürfeln von Adreß- und/oder Datensignalen der im beschreibbaren Speicher (1) zu speichernden Daten gemäß den vom Verwürfelungsmustergenerator (21) zugeführten Verwürfelungsmustersignalen beim Einspeichern dieser Daten und zum entsprechenden Entwürfeln der Datensignale beim Auslesen aus dem löschbaren Speicher (1),
**dadurch gekennzeichnet,**
**daß** der Verwürfelungsmustergenerator (21) eine getaktete, rückgekoppelte Schieberegisteranordnung (22) umfaßt, der während der Rücksetzsignalfolge die Kontrollsignale und/oder wenigstens ein Teil der individualisierenden Daten aus dem Lesespeicher (26) und/oder ein durch logische Verknüpfung daraus erzeugtes Signalmuster zugeleitet werden und die daraus die Verwürfelungsmustersignale erzeugt und zur anschließenden Abgabe an die Verwürfelungslogik (9) speichert.

2. Schaltungsanordnung nach Anspruch 1, **dadurch gekennzeichnet,**
**daß** die Verwürfelungslogik (9) umfaßt:
- eine Vertauschungsstufe (10, 11, 12) zum Vertauschen verschiedenwertiger Bits der Verwürfelungslogik (9) zugeführter Adreß- und/oder Datensignale untereinander und
- eine Invertierungsstufe (13, 14, 15) zum Invertieren der Werte der Bits der Adreß- und/oder Datensignale,
- wobei die Vertauschungsstufe (10, 11, 12) und die Invertierungsstufe (13, 14, 15) durch die Verwürfelungsmustersignale gesteuert werden.

3. Schaltungsanordnung nach Anspruch 2, **dadurch gekennzeichnet,**
**daß** die Verwürfelungslogik (9) eine Dekodierstufe (16) umfaßt zum Gewinnen von Steuersignalen für die Vertauschungsstufe (10, 11, 12) und die Invertierungsstufe (13, 14, 15) aus den Verwürfelungsmustersignalen.

## Claims

1. A circuit arrangement for electronic data processing, which circuit arrangement includes
- a writeable memory (1) for storing data to be protected against unauthorized access,
- a read-only memory (26) for storing individualizing data,
- a control unit (28) for generating certain control signals in dependence on a reset signal sequence to be executed by the control unit (28) during operation of the circuit arrangement,
- a scrambling sample generator (21) for generating scrambling sample signals by combining at least part of the individualizing data from the read-only memory (26) with the control signals during the execution of the reset signal sequence and for subsequently outputting these scrambling sample signals until the execution of a next reset signal sequence,
- and a scrambling logic unit (9) for the scrambling of address and/or data signals of the data to be stored in the writeable memory (1) in conformity with the scrambling sample signals supplied by the scrambling sample generator (21) upon storage of these data, and for the corresponding descrambling of the data signals upon reading out from the erasable memory (1),
**characterized in that** the scrambling sample generator (21) comprises a clocked, feedback shift register arrangement (22), to which the control signals are supplied during the reset signal sequence and/or at least part of the individualized data from the read-only memory (26) and/or a signal sample generated therefrom via logic combination, the shift register arrangement generating from this signal sample the scrambling sample signals and stores them to be fed to the scrambling logic unit (9).

2. A circuit arrangement as claimed in Claim 1, **characterized in that**
the scrambling logic unit (9) includes
- a permutation stage (10, 11, 12) for the mutual permutation of bits of different value in the address and/or data signals applied to the scrambling logic unit (9), and
- an inverter stage (13, 14, 15) for inverting the values of the bits of the address and/or data signals,
- the permutation stage (10, 11, 12) and the inverter stage (13, 14, 15) being controlled by the scrambling sample signals.

3. A circuit arrangement as claimed in Claim 2, **characterized in that**
the scrambling logic unit (9) includes a decoding stage (16) for extracting control signals for the permutation stage (10, 11, 12) and the inverter stage (13, 14, 15) from the scrambling sample signals.

## Revendications

1. Circuit pour le traitement de données électroniques avec
- une mémoire inscriptible (1) pour l'enregistrement de données à protéger contre un accès non autorisé;
- une mémoire de lecture (26) pour l'enregistrement de données individualisantes,
- une commande (28) pour la production de certains signaux de contrôle en fonction d'une séquence de signaux de réinitialisation à exécuter par la commande (28) pendant le fonctionnement du circuit,
- un générateur de modèles de hachage (21) pour la production de signaux de modèle de hachage par liaison d'au moins une partie des données individualisantes provenant de la mémoire de lecture (26) avec les signaux de contrôle pendant l'exécution de la séquence de signaux de réinitialisation et pour la sortie consécutive de ces signaux de modèles de hachage jusqu'à l'exécution d'une séquence suivante de signaux de réinitialisation,
- ainsi qu'une logique de hachage (9) pour le hachage de signaux d'adresse et/ou de données des données à enregistrer dans la mémoire inscriptible (1) conformément aux signaux de modèle de hachage amenés par le générateur de modèles de hachage (21) lors de l'enregistrement de ces données pour la neutralisation du hachage correspondante des signaux de données lors de la lecture à partir de la mémoire (1) effaçable,
**caractérisé en ce**
**que** le générateur de modèles de hachage (21) comprend un dispositif de registre à décalage (22) rétroactif et rythmé auquel, pendant la séquence de signaux de réinitialisation, les signaux de contrôle et/ou au moins une partie des données individualisantes provenant de la mémoire de lecture (26) et/ou un modèle de signal produit à partir de là par liaison logique sont amenés, qui produit à partir de là les signaux de modèle de hachage et les enregistre pour leur délivrance consécutive à la logique de hachage (9).

2. Circuit selon la revendication 1, **caractérisé en ce**
**que** la logique de hachage (9) comprend :
- un étage d'échange (10, 11, 12) pour l'échange de bits de différentes valeurs des signaux d'adresse et/ou de données amenés à la logique de hachage (9) entre eux et
- un étage d'inversion (13, 14, 15) pour l'inversion des valeurs des bits des signaux d'adresse et/ou de données,
- l'étage d'échange (10, 11, 12) et l'étage d'inversion (13, 14, 15) étant commandé par les signaux de modèle de hachage.

3. Circuit selon la revendication 2, **caractérisé en ce**
**que** la logique de hachage (9) comprend un étage de décodage (16) pour la production de signaux de commande pour l'étage d'échange (10, 11, 12) et l'étage d'inversion (13, 14, 15) à partir des signaux de modèle de hachage.
